# EUROPEAN PATENT SPECIFICATION

(11) **EP 0 996 285 B1**
(45) Date of publication and mention of the grant of the patent: **24.12.2008**
(21) Application number: 99402561.7
(22) Date of filing: 18.10.1999
(51) Int. Cl.: H04N 5/63, H02M 3/335

(54) **Power supply with multiple mode operation**
Stromversorgung mit mehreren Betriebsarten
Alimentation à modes multiples de fonctionnement

(30) Priority: 19.10.1998 US 104824 P
(43) Date of publication of application: 26.04.2000
(73) Proprietor: THOMSON CONSUMER ELECTRONICS, INC., Indianapolis, IN 46290-1024 (US)
(72) Inventor: Nath, Gautham, 92648 Boulogne Cedex (FR)
(74) Representative: Heuer, Wilhelm

(56) References cited:
- EP-A- 0 458 716
- EP-A- 0 618 665
- US-A- 5 017 844
- US-A- 5 812 383

## Description

The invention is related to a power supply of a video display apparatus. A power supply of this type is known from US 5.812.383.

EP 0 458 716 discloses a battery management system in which in a first mode, a load such as a computer is operated from an AC mains and in which the load is operated from a battery if the AC mains fails.

It is known to provide a television receiver, which is capable of operating in a standby mode and in a power-on, run or normal mode. In the normal mode, the television receiver operates to process video and audio signals and to display those signals.

Typically, the deflection circuits are energized from a source of a supply voltage B+. Supply voltage B+ is regulated in a regulator of a switch mode power supply and produced from a voltage developed in a first winding of a transformer. A portion of voltage B+ is fed back to a control input of the switch mode power supply regulator via a negative feedback path for regulation purposes.

In a standby mode, the deflection stages are disabled and no current is drawn from the first winding. A standby supply voltage produced from a voltage developed in a second winding of the transformer may be used for energizing a microprocessor/remote control circuit, during the standby mode.

The object of the invention is to provide a power supply of a video apparatus in which power consumption is reduced in standby mode.

The object of the invention is achieved by a power supply according to claim 1. Dependent claims define advantageous embodiments of the invention.

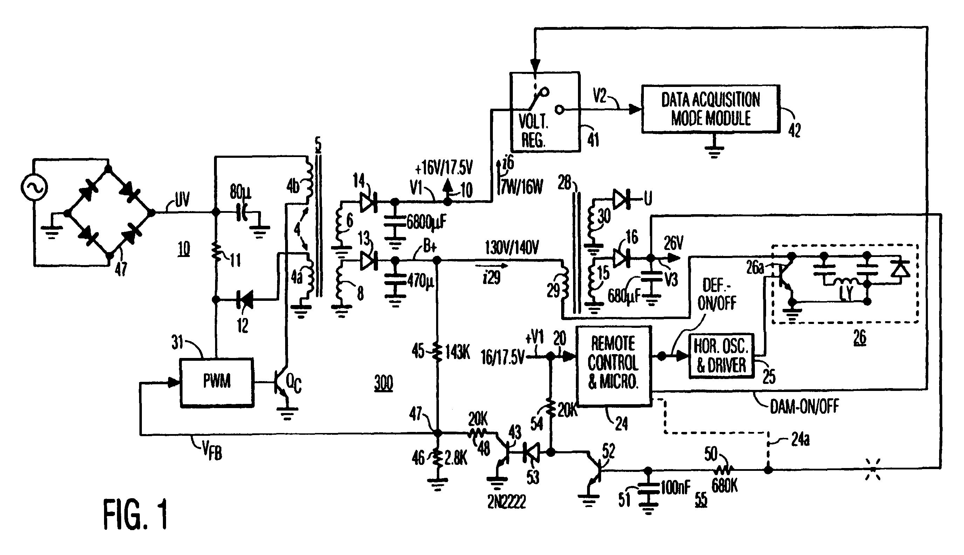

### Brief Description of the Drawing

The sole FIGURE illustrates a power supply, embodying an inventive feature, of a television receiver.

### Detailed Description of the Present Invention

The sole FIGURE illustrates a portion of a television receiver circuit that includes a power supply 10. Power supply 10 is coupled to a bridge rectifier 47 producing an unregulated voltage UV. Voltage UV is coupled to a primary winding 4b of a transformer 5 . Winding 4b is coupled to a collector of a switching transistor QC. A conventional pulse-width modulator 31 is coupled to a base of transistor QC for generating current pulses in winding 4b in a conventional manner. Pulse-width modulator 31 is energized initially via a start-up resistor 11 that is coupled to voltage UV. After a start-up interval, pulse-width modulator 31 is energized via a diode 12 from a voltage developed in a second winding 4a of transformer 5, in a conventional manner. A regulated, output supply voltage B + is produced from a voltage developed in a winding 8 of transformer 5 by a rectifier 13. Similarly, a regulated, output supply voltage V1 is produced from a voltage developed in a winding 6 of transformer 5 by a rectifier 14.

Horizontal deflection circuit 26 includes a horizontal deflection winding LY coupled to a switching transistor 26a. Transistor 26a is coupled to a primary winding 29 of a flyback transformer 28. Voltage B + is developed at a terminal of winding 29 that is remote from transistor 26a. Circuit 26 produces horizontal flyback pulses in a high voltage winding 30. Consequently, an ultor voltage U is developed. A low voltage winding 15 is coupled to a rectifier 16 that generates a supply voltage V3. Voltage V3 may be coupled to energize, for example, a vertical deflection circuit, not shown.

Voltage V1 is coupled to energize a remote control receiver/microprocessor 24. Remote control/microprocessor 24 produces a signal DEF-ON/OFF having an ON state, during the run mode, and an OFF state, during the standby mode, as selected by the user. When the ON state is produced, a horizontal oscillator and driver 25 produces horizontal line pulses that are coupled to horizontal deflection circuit 26 for operation in the run mode. The result is that a supply current i29 flowing in a current path that includes winding 8 is produced. When the OFF state is produced, horizontal oscillator and driver 25 ceases producing horizontal line pulses and horizontal deflection circuit 26 is disabled, in the standby mode. The result is that supply current i29 is significantly reduced. Thus, voltage V3 is generated, during the run mode operation, and is turned off, during standby mode.

Regulation of voltage B+ is obtained by coupling a voltage VFB, forming a portion of voltage B+, via a switched feedback network 300, embodying an inventive feature, to a control input of pulse-width modulator 31. Regulation of voltage V1 is obtained indirectly from the regulation of voltage B+, referred to as cross-regulation, because of the magnetic coupling of windings 6 and 8 of transformer 5.

A data acquisition mode (DAM) module 42 contains memory to store a television program guide information. The information is carried during the vertical-blanking interval on a selected broadcast station. Module 42 is energized from a supply voltage V2 produced in a voltage regulator 41 and derived from standby supply voltage V 1. Regulator 41 includes, for example, a switched, series pass regulator, not shown.

Remote control receiver/microprocessor 24 produces an on/off control signal DAM-ON/OFF having an ON state, when the operation of DAM module 42 is required, and an OFF state, when the operation of DAM module 42 is not required. On/off control signal DAM-ON/OFF is coupled to regulator 41. Voltage V2 is turned on, in accordance with the ON State of on/off control signal DAM-ON/OFF, only during scheduled times, as programmed by the user. At other times, voltage V2 is turned off. Thereby, advantageously, excessive power consumption is avoided, when DAM module 42 is not required to process incoming information.

When DAM module 42 is energized, deflection circuit 26 is disabled. Whereas, stages, not shown, of the receiver, used for processing the incoming video signal are energized. During the run mode, supply current i29 results in a significant load with respect to winding 8 of transformer 5. In contrast, outside the run mode operation, when DAM module 42 is energized, winding 8 is not loaded.

Energized DAM module 42 causes a level of a supply current i6 from winding 6 of transformer 5 to be significant. The magnetic coupling between windings 6 and 8 may not be tight, as in an ideal transformer. Therefore, the decreased loading in winding 8, resulting from deflection circuit 26 being disabled, together with the increased loading in winding 6, resulting from DAM module 42 being energized, disadvantageously, tends to cause decrease in supply voltage V1, during the DAM operation. The decrease occurs in supply voltage V1 because of the imperfect magnetic coupling in transformer 5. The decrease in voltage V1, during the DAM operation, relative to its level, during the standby and run modes, occurs in a manner to decrease a ratio between voltages V1 and B +. The tendency of voltage V1 to decrease, if not compensated, could, disadvantageously, cause voltage V2 of regulator 41 to reach too low level, insufficient for maintaining proper regulation in regulator 41.

In carrying out an aspect of the invention, a transistor switch 43 is included in switched feedback network 300. Switched feedback network 300 includes a resistive voltage divider formed by a resistor 45 coupled to voltage B+ and a resistor 46, coupled to a junction terminal 47. Feedback voltage VFB that is coupled to modulator 31 is developed at terminal 47. Terminal 47 may be coupled to modulator 31 via an opto-coupler, not shown, for providing hot-ground/cold-ground isolation, in a well-known manner.

Switch transistor 43 is coupled to junction terminal 47 via a resistor 48. A series arrangement formed by resistor 48 and transistor 43 causes an attenuation of voltage VFB, in the DAM operation, when switch transistor 43 is turned on. Consequently, advantageously, the negative feedback loop causes supply voltage V1 to increase to a level that is closer to that developed, during the run mode, for providing compensation. Outside the standby mode of operation, switch transistor 43 is turned off for generating voltage B+ and voltage V1 at nominal voltage levels of 130V and 16V, respectively. Thus, advantageously, a ratio between voltages VFB and B+ changes in accordance with the state of switch transistor 43. Advantageously, switched feedback network 300 applies voltage B+ to modulator 31 both in the run mode and in the standby mode. Thereby, a common feedback path that includes resistor 45 is formed in each mode of operation. Thus, the feedback path is simplified.

Transistor 43 is controlled by supply voltage V3 that is developed only in the run mode, when deflection circuit 26 is energized. Supply voltage V3 is coupled via a resistor 50, forming a filter 55 with a capacitor 51, to a base electrode of a transistor switch 52 for turning on transistor switch 52. When transistor 52 is turned on, a collector voltage of transistor 52 is zero. Consequently, the zero volt collector voltage of transistor 52 is applied to a base electrode of transistor 43 via a diode 53, causing transistor 43 to be nonconductive.

On the other hand, when deflection circuit 26 is disabled, during the standby mode and the DAM operation, transistor 52 is non-conductive. The collector voltage of transistor 52 is pulled up via a pull-up resistor 54 that is coupled to voltage V1. Consequently, the collector voltage of transistor 52 is sufficiently large to turn on transistor 43. During the DAM operation, voltage B+ and voltage V1 are at voltage levels of 140V and 17.5V, respectively. Had transistor 43 and its associated circuits not been used, voltage V1 could have dropped to significantly. Transistor 43 increases voltage V1 to a level that is, advantageously, sufficient to operate voltage regulator 41 within a normal operation range.

As an alternative for controlling transistor 52 by voltage V3, remote control/microprocessor 24 produces a control signal 24a that is coupled to resistor 50 instead of voltage V3, as shown in a broken line. Signal 24a has an ON state, during the DAM operation, and an OFF state, outside the DAM operation, including during the run mode operation. The operation of transistor 52 in this alternative is similar to that when voltage V3 is used for controlling transistor 52, as explained before.

DAM module 42 may be included in other video apparatus such as, for example, a video tape recorder, not shown. In such situation, a transistor switch similar to transistor switch 43 may be included in a switched feedback network that is similar to switched feedback 300 of a corresponding power supply.

## Claims

1. A power supply of a video display apparatus configured to generate from an AC source:
a DC operating voltage (B+) for supplying power to a deflection circuit (26) of said video display apparatus in a run mode of operation of said video display apparatus,
a standby DC voltage (V1) for supplying power to a control unit (24), said control unit (24) providing a first control signal (Def on/off) for disabling said deflection circuit (26) in a standby mode of operation of said video display apparatus, said control unit (24) providing a second control signal (DAM ON/OFF);
**characterised in that** said standby voltage (V1) is coupled to a data acquisition unit (42) by a voltage regulator (41) in accordance with said second control signal (DAM ON/OFF);
the power supply further comprising a feedback network (300) for regulating said operating voltage (B+),
which feedback network (300) comprises a switch (43) operable in accordance with a third control signal (V3) derived from said deflection circuit (26) to vary regulation of said DC operating voltage (B+) within said run and standby modes of operation.

2. The power supply of claim 1 further **characterized by** said data acquisition unit (42) including a memory for storing television guide information;
a user operable remote control unit (24) coupled to said control unit for providing said second control signal (DAM ON/OFF) during scheduled times as programmed by a user.

3. The power supply of claim 1 further **characterized in that** said switch (43) varies regulation of said DC operating voltage (B+) by attenuating a feedback voltage (VFB) in a feedback loop of said feedback network (300) when said video display apparatus is in standby mode.

## Patentansprüche

1. Stromversorgung eines Videoanzeigegerätes, die ausgelegt ist, um von einer Wechselstromquelle zu erzeugen:
eine Gleichstrom-Betriebsspannung (B+), um einer Ablenkungsschaltung (26) des Videoanzeigegerätes in einem Arbeitsbetriebsmodus des Videoanzeigegerätes Strom zu liefern,
eine Gleichstrom-Bereitschaftsspannung (V1), um einer Steuereinheit (24) Strom zu liefern, wobei die Steuereinheit (24) ein erstes Steuersignal (Def ON/OFF) zum Sperren der Ablenkungsschaltung (26) in einem Bereitschaftsbetriebsmodus des Videoanzeigegerätes bereitstellt, wobei die Steuereinheit (24) ein zweites Steuersignal (DAM ON/OFF) bereitstellt;
**dadurch gekennzeichnet, dass** die Bereitschaftsspannung (V1) in Übereinstimmung mit dem zweiten Steuersignal (DAM ON/OFF) durch einen Spannungsregler (41) mit einer Datenerfassungseinheit (42) gekoppelt ist;
wobei die Stromversorgung ferner ein Rückkopplungsnetzwerk (300) zum Regeln der Betriebsspannung (B+) umfasst,
wobei das Rückkopplungsnetzwerk (300) einen Schalter (43) umfasst, der in Übereinstimmung mit einem dritten Steuersignal (V3) betreibbar ist, das von der Ablenkungsschaltung (26) abgeleitet wird, um die Regelung der Gleichstrom-Betriebsspannung (B+) innerhalb der Arbeits- und Bereitschaftsbetriebsmodi zu verändern.

2. Stromversorgung nach Anspruch 1, ferner **dadurch gekennzeichnet, dass** die Datenerfassungseinheit (42) einen Speicher zum Speichern von Fernsehprogramminformationen enthält;
und dass eine von einem Benutzer bedienbare Fernbedienungseinheit (24) mit der Steuereinheit zum Bereitstellen des zweiten Steuersignals (DAM ON/OFF) während festgelegter, von einem Benutzer programmierter Zeiten gekoppelt ist.

3. Stromversorgung nach Anspruch 1, ferner **dadurch gekennzeichnet, dass** der Schalter (43) die Regelung der Gleichstrom-Betriebsspannung (B+) verändert, indem eine Rückkopplungsspannung (VFB) in einer Rückkopplungsschleife des Rückkopplungsnetzwerkes (300) abgeschwächt wird, wenn sich das Videoanzeigegerät im Bereitschaftsmodus befindet.

## Revendications

1. Alimentation électrique d'un appareil d'affichage vidéo configurée pour générer depuis une source c.a. :
une tension de fonctionnement c.c. (B+) pour alimenter en électricité un circuit de déviation (26) dudit appareil d'affichage vidéo dans un mode de fonctionnement en exécution dudit appareil d'affichage vidéo,
une tension c.c. en veille (V1) pour alimenter en électricité une unité de commande (24), ladite unité de commande (24) fournissant un premier signal de commande (Def ON/OFF) pour désactiver ledit circuit de déviation (26) dans un mode de fonctionnement en veille dudit appareil d'affichage vidéo, ladite unité de commande (24) fournissant un deuxième signal de commande (DAM ON/OFF) ;
**caractérisée en ce que** ladite tension en veille (V1) est couplée à une unité d'acquisition de données (42) par un régulateur de tension (41) selon ledit deuxième signal de commande (DAM ON/OFF) ;
l'alimentation électrique comprenant en outre un réseau de rétroaction (300) pour réguler ladite tension de fonctionnement (B+),
lequel réseau de rétroaction (300) comprend un interrupteur (43) pouvant être mis en fonctionnement selon un troisième signal de commande (V3) dérivé dudit circuit de déviation (26) pour varier la régulation de ladite tension de fonctionnement c.c. (B+) dans lesdits modes de fonctionnement en exécution et en veille.

2. Alimentation électrique selon la revendication 1, **caractérisée en outre par** ladite unité d'acquisition de données (42) comprenant une mémoire pour enregistrer des informations de guide de télévision ;
une unité de commande à distance (24) pouvant être mise en fonctionnement par un utilisateur couplée à ladite unité de commande pour fournir ledit deuxième signal de commande (DAM ON/OFF) pendant des temps prédéterminés comme programmés par un utilisateur.

3. Alimentation électrique selon la revendication 1, **caractérisée en outre en ce que** ledit interrupteur (43) varie la régulation de ladite tension de fonctionnement c.c. (B+) en atténuant une tension de rétroaction (VFB) dans une boucle de rétroaction dudit réseau de rétroaction (300) quand ledit appareil d'affichage vidéo est en mode veille.
